# EUROPEAN PATENT APPLICATION

(11) **EP 0 641 994 A1**
(43) Date of publication of application: **08.03.1995**
(21) Application number: 94202326.8
(22) Date of filing: 16.08.1994
(51) Int. Cl.: G01B 13/00, G01K 15/00

(54) **Method and apparatus for calibrating a bi-metal gauge**

(30) Priority: 01.09.1993 GB 9318113
(71) Applicant: DELCO ELECTRONICS OVERSEAS CORPORATION, Detroit, Michigan 48202 (US)
(72) Inventor: Knight, Brian Anthony, Ainsdale, Southport PR8 2SY (GB); Brown, Philip Charles, Aintree, Liverpool L10 8JZ (GB); Cowperthwaite, David William, Southport PR9 9YB (GB)
(74) Representative: Denton, Michael John

(57) **Abstract**

Calibration apparatus for calibrating a gauge, including a gauge element (112) mounted on a movable support (116), a pointer carrier (150) co-operable with the gauge element (112) and a pointer (160) rotatable on the pointer carrier (150), the calibration apparatus including a camera (212) disposed to obtain an image of the gauge, a tool (206) for adjusting the support to adjust the position of the gauge element (112) and a computer (214) for processing the obtained image to determine the position of the gauge element (112) relative to the location of the pointer carrier to control the tool (206) on the basis position of the gauge element (112). The pointer (160) is then set onto the pointer carrier (150).

## Description

The present invention relates to a method and apparatus for calibrating a bi-metal gauge.

A known bi-metal gauge includes a bi-metal element fixed to a support member and having a cantilevered portion over which an electrical coil is wound. When current is passed through the coil, the cantilevered portion is heated and deflects from its rest position due to the imbalance in the composition thereof. The free end of the cantilevered portion co-operates with a pointer carrier such that deflection of the cantilevered portion causes rotation of a pointer carried by the pointer carrier.

On assembly of the gauge, the position of the bi-metal element must be adjusted relative to the pointer carrier to ensure (a) that deflection of the bi-metal element will cause rotation of the pointer through the whole of its intended range and (b) that deflection of the bi-metal element causes the correct amount of rotation of the pointer.

A known method of calibrating such a gauge involves two manual calibration steps, the first of which involves rotating the bi-metal element relative to the pointer carrier so as to adjust rest position of the pointer and thereby the amount of rotation of the pointer for any predetermined gauge reading. The second stage involves moving the support member in a direction towards or away from the pointer carrier so as to adjust the range of rotation of the pointer.

The first stage of this calibration is achieved by mounting the pointer carrier and an end of the support member adjacent the pointer carrier to a cam in such a manner that rotation of the cam rotates the bi-metal element relative to the pointer carrier. The pointer carrier is provided with a pointer pin which is D-shaped in axial cross-section and fits into a bore of the pointer shaft, which is also D-shaped in axial cross-section, such that rotation of the pointer carrier results in adjustment of the rest position of the pointer.

A problem with this type of gauge is that the calibration stage is time consuming and expensive.

The present invention seeks to provide an improved method and apparatus for calibrating a bi-metal gauge.

According to an aspect of the present invention, there is provided calibration apparatus for calibrating a gauge as specified in claim 1.

Such apparatus can provide reliable and rapid calibration of gauges, thereby saving significant manufacturing costs.

Preferably, processing means of the calibration apparatus is adapted to determine the distance between the gauge element and the predetermined location and to control the adjusting means to move the gauge element to a preset distance of the predetermined location. With some gauges, such as bi-metal gauges, the distance of the gauge element from the axis of rotation of the pointer determines the amount of pointer rotation which is possible. In such gauges, moving the gauge element away from the axis of rotation of the pointer reduces its range of travel, while moving the gauge element towards the axis of rotation of the pointer increases its range of travel.

Where the gauge element is a bi-metal element including coupling means for coupling the bi-metal element to the pointer carrier, the processing means is preferably adapted to determine the position of the coupling means relative to the predetermined location and to control the adjusting means to move the bi-metal element to a position in which the coupling means is within a preset distance of the predetermined location. In certain cases, the coupling means can readily be picked out by an electronic vision system, thereby facilitating the determination of the position of the gauge element.

In an embodiment, the calibration apparatus comprises energising means for energising the gauge element, the processing means being adapted to control the energising means to energise the gauge element prior to obtaining an image of the gauge. By energising the gauge during various stages of calibration, it can be ensured that the gauge is accurately calibrated at chosen gauge readings, for example at critical readings such as low fuel level or high coolant temperature.

Advantageously, the calibration apparatus comprises fixing means for fixing the support relative to a gauge case. With most gauges of this type, it is necessary after calibration to fix the support to the gauge case to avoid movement thereof. The provision of fixing means allows such fixing to be carried out without manual intervention.

In an embodiment, the calibration apparatus comprises pointer setting means for setting the pointer onto the pointer carrier, the processing means being adapted to control the pointer setting means to set the pointer in a predetermined orientation relative to the gauge. The provision of pointer setting means enables completely automatic calibration of a gauge to be carried out.

According to another aspect of the present invention, there is provided a method of calibrating a gauge as specified in claim 7.

Preferably, the gauge element is energised prior to obtaining an image of the gauge. This step can take into account properties of the gauge element, for example the actual amount by which the gauge element deflects at the predetermined energisation.

In a preferred embodiment, the pointer is set onto the pointer carrier in a predetermined orientation relative to the gauge. Advantageously, the gauge element is energised to a predetermined state prior to setting the pointer onto the pointer carrier. The gauge could be energised to a critical state representative of a reading such as low fuel level or high coolant temperature, thereby ensuring that the pointer is accurate at the critical states measured by the gauge.

An embodiment of the present invention is described below, by way of illustration only, with reference to the accompanying drawings, in which:
Figure 1 is a plan view of an embodiment of bi-metal gauge;
Figure 2 is a side elevational view of a bi-metal element of the gauge of Figure 2;
Figure 3 is a schematic diagram of the principal components of an embodiment of apparatus for calibrating the gauge of Figure 1; and
Figure 4 is a flow chart of an embodiment of method of calibrating the bi-metal gauge of Figure 1.

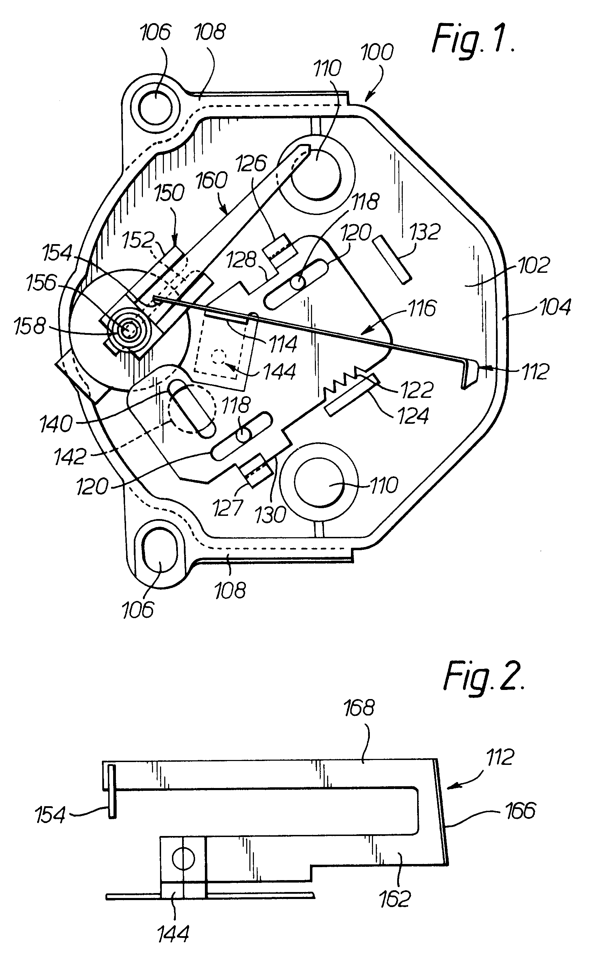

Referring to Figure 1, in the embodiment of gauge shown, a front wall of the gauge and a gauge dial are omitted for the sake of clarity. In applications where the gauge is intended for automotive use, for example in a vehicle instrument cluster in which the graphic symbols of the gauge are designed to be illuminated from the rear of the dial, the front wall of the gauge is part of a light guide of transparent plastics material. The dial is the form of a generally opaque appliqué which includes translucent regions forming graphic symbols associated with that gauge.

Figure 1 shows a gauge pointer and pointer carrier in outline so as not to obscure from the view the other components of the gauge.

The case 100 includes a substantially flat base wall 102 and a peripheral wall 104 extending around the perimeter of the base wall 102. A pair of apertures 106 are provided in respective flanges 108 extending from the peripheral wall 104 for use in fixing the support member to its front wall and/or to an instrument case or other components. First and second apertures in the base wall 102 support first and second metal studs 110 for use in securing the gauge within an instrument or to other components and for use as electrical terminals for the coil (not shown) for
bi-metal element 112.

Referring to Figure 2, which shows the bi-metal element 160 in better detail, it can be seen that the element 160 is substantially of U-shaped form. It includes a shorter arm 162 having a flange 164 at its free end for connection to the flange 144 of the base plate 116.

A portion of the shorter arm 162 has a greater axial cross-sectional width than the remainder of the arm and in use extends below the remainder of the arm 162. This ensures that the bi-metal element 160 is spaced in use from the base plate 116 so that its deflection is not impeded.

The connecting piece 166 connecting the shorter arm 162 to the free arm 168 is generally rectangular and is bent about a line at a slight angle to the normal of the two arms 162,168. The free arm 168 is substantially rectangular and has at attached at its free end a link pin 154, which extends in a direction substantially perpendicular to the free arm 168.

Bi-metal element 112 is fixed by a tab 114 to a generally rectangular support member or carrier plate 116. For the sake of convenience, the tab 114 is fixed to a flange 144 of the carrier plate which can be bent out of the plane of the carrier plate 116 towards the bi-metal element 112.

Referring again to Figure 1, a pair of guide posts 118 extend from the base wall 102 through respective elongate slots 120 in the carrier plate 116 for enabling movement of the carrier plate 116 solely in the axial direction thereof.

Guiding is also provided by means of hooked guide walls 126,127 extending from the base wall 102 proximate opposing corners of the carrier plate 116, each guide wall 126,127 including a flange located over the carrier plate 116 for preventing movement thereof off the base wall 102.

It is possible to omit either the guide posts 118 and slots 120 or the hooked guide walls 126,127.

At a location normally proximate one of the guide walls 126, the carrier plate 116 is provided with a recess 128 which can be aligned with that guide wall. At the other guide wall 127, the carrier plate 116 has a substantially rectangular flange 130 which is normally aligned with this guide wall 127. In order to fit the carrier plate to onto the base wall 102, the flange 130 is mis-aligned and the recess 128 is aligned with their respective guide walls 126,127. This enables the carrier plate 116 to pass the two guide walls 126,127 and then to be slid in the direction of pointer 160 so as to pass under the flanges of the guide walls 126,127 for retention thereby. A locating wall 132 is provided an end of the carrier plate 116 opposite the pointer side on the plate for assisting in locating the carrier plate 116 in the case 100.

A transverse elongate opening 140 is provided in the carrier plate 116 and is disposed over a substantially circular aperture 142 in the base wall 102. The carrier plate 116 can be moved by a tool (not shown) inserted into the elongate opening 140 through the circular aperture 142.

A part 122 of one of the elongate sides of the carrier plate 116 is serrated to act as a fixing point for fixing the carrier plate 116 to the base wall 102 after calibration of the gauge. For this purpose, there is provided adjacent the serrated part 122 a fixing wall 124 extending from the base wall 102. The fixing wall either support an amount of adhesive between the fixing wall and the serrated part 122 or be melted and hardened onto the serrated part 122.

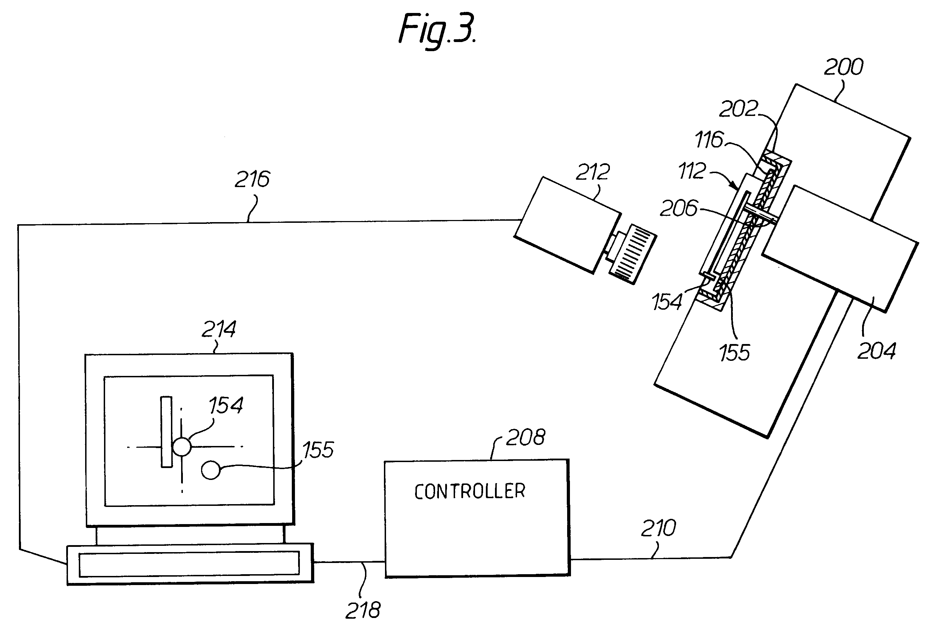

Located in the base wall 102 at the opposite side of the carrier plate 116 from the guide wall 126 is a bore (shown in Figure 3 under the reference 155) for pivotably receiving a lower link pin of a pointer carrier 150. The pointer carrier 150 is of generally cylindrical form and includes a pair of spaced parallel arms 152 extending substantially perpendicularly from the body of the pointer carrier 150. The arms 152 receive slidably therebetween link pin 154 secured at the free end of the cantilevered portion of bi-metal gauge 112.

An upper pointer pin 156 extending substantially co-axially from the body of the pointer carrier 150 is received within a bore of pointer shaft 158 of pointer 160. The shapes of the upper pointer pin 156 and of the bore of pointer shaft 158 are such that the pointer 160 can be placed on the upper pointer pin 156 in any orientation.

Referring to Figure 3, the embodiment of calibration apparatus shown in schematic form includes a calibration bed 200 having a gauge holder 202 in a recess of the calibration bed 200. The gauge holder 202 includes gripping means (not shown) for gripping the gauge case firmly in place and supply means for feeding electrical current to the studs 110 of the gauge. The gripping means and supply means could be combined in a single unit.

Mounted in the calibration bed 200 is a stepper motor 204 for driving an adjustment tool 206 which passes through the circular aperture 142 in the base wall 102 of the gauge case and into the transverse slot 140 of the carrier plate 116.

A controller 208, of suitable microprocessor form, is coupled though a line 210 to the supply of the stepper motor 204 for controlling its operation.

A camera 212, typically of conventional CCD type, is focused onto the region of the link pin 154 of the bi-metal element 160 and onto the bore 155 for the pointer carrier 150. The image obtained by the camera 212 is of digital form and is sent through line 216 to computer 214 for processing. Computer 214 is of conventional form so is not described in further detail herein.

The computer 214 is coupled to the controller 208 via a line 218 for sending signals to the controller relating to the adjustment required, determined on the basis of the processed image.

The computer 214 is also coupled to control the camera 212 to obtain an image of the gauge being calibrated and to derive therefrom the positions of the end of the link pin 154 and of the bore 155 for the pointer carrier 150. From these derived positions, the computer 214 is able to determine the spacing between the link pin 154 and the bore 155 in the base wall 102 and to calculate therefrom whether this distance is more or less than a predetermined distance representative of the desired distance between the link pin 154 and the bore 155. From this calculation, a signal representative of the amount and direction of adjustment required can be derived.

The controller 208 is coupled to send a driving signal to the stepper motor 204 to cause the stepper motor to rotate in the required direction and by the required amount. Rotation of the stepper motor 204 causes the tool 206, through engagement with the elongate slot 140 in the carrier plate 102, to move the carrier plate and thus the link pin 154 either towards or away from the bore 155 for the pointer carrier 154.

Feedback through the camera 212 can determine when the pointer carrier 154 reaches the correct distance from the bore 155.

Following adjustment of the carrier plate 102, the pointer can then be fitted to the pointer carrier at an orientation representative of the gauge reading which indicates the state of energisation of the gauge.

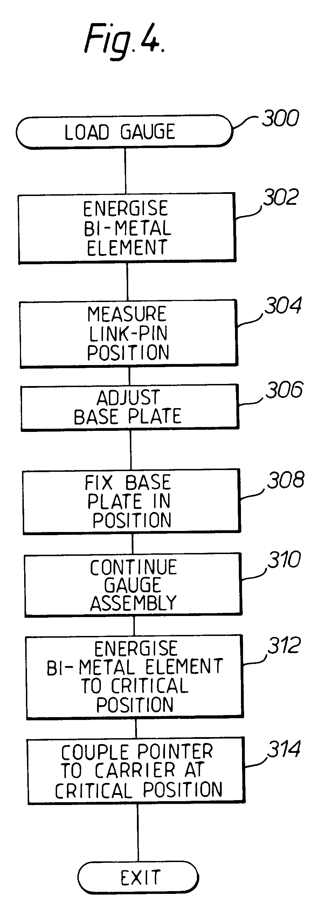

An embodiment of calibration process is described in further detail with reference to Figure 4.

At step 300 of this calibration process, a gauge to be calibrated is loaded into the gauge holder 202 such that it is firmly held in place and the studs 110 are coupled to a source of current. The loading of a gauge into the gauge holder also causes the tool 206 to engage the transverse slot 140 in the carrier plate 116. At this stage, neither the pointer carrier 150, nor the pointer 160 nor any front cover has been fitted t the gauge.

At step 302, a predetermined current is passed through the coil of the bi-metal element 112 to cause the bi-metal element to deflect by an amount related to the predetermined current. No image of the gauge is taken until after a predetermined warm up period to ensure that the bi-metal element 112 has stabilised.

After the warm up period, at step 304, the computer 214 commands the camera 212 to obtain an image of the gauge. The computer 214 then processes the image to determine the positions of the link pin 154 and the bore 155 in the base wall 102. From the determined positions, the computer 214 then calculates the distance between these two components and compares the calculated distance with a predetermined desired distance stored in computer memory. If the measured distance is less than the desired distance, it is determined that the carrier plate 112 needs to be moved away from the bore 155. On the other hand, if the calculated distance is greater than the desired distance, it is determined that the carrier plate 102 needs to be moved towards the bore 155.

The commands for adjusting the position of the carrier plate 102 are sent by the computer 214 to the controller 208 at step 306. These commands are in the form of a signal representative of the amount and direction of rotation of the tool 206 required to move the carrier plate 102 sufficiently to bring the link pin 154 to the desired distance from the bore 155.

Step 306 also includes a feedback routine in which the computer 214 commands the camera 212 to obtain another image of the gauge. This other image is then processed by the computer 214 to determine whether the link pin 154 has moved to the desired distance from the bore 155. Step 306 is repeated until no further adjustment is required.

Once the link pin 154 is in the correct position relative to the bore 155 for the pointer carrier 150, the carrier plate is fixed in position at step 308. This can be achieved either by feeding an amount of adhesive or other cementing material between the serrated portion 122 of the carrier plate 116 and the fixing wall 124. Alternatively, the fixing wall may be made of thermoplastic material and melted, such as by ultrasonic welding, onto the serrated portion 122 of the carrier plate 116.

Assembly of the gauge is continued at step 310, which involves fitting the pointer carrier 150 into the bore 155 such that the link pin 154 is located between the spaced arms 152. The front cover of the gauge is then attached to the gauge case, such that the upper pointer pin 156 extends through an aperture in the front cover.

A current of predetermined magnitude is then fed, at step 312, through the coil of the bi-metal element 160. This magnitude of the current is chosen to be that which would be produced when the parameter measured by the gauge is at a critical level, for example at a low fuel level or at a high coolant temperature. The pointer 160 is then set, at step 314, onto the upper carrier pin 156 at the critical reading. In this manner, the calibration ensures that the pointer will accurately indicate the critical condition. Any inaccuracies, caused for example by lack of linearity between the scale of the gauge display and the deflection of the bi-metal element 112, will occur at non-critical pointer positions.

The placement of the pointer 160 onto the upper carrier pin 156 can either be done manually or automatically by, for example, a robot arm or other tool under the control of the computer 208 and through the image obtained from the camera 212.

In alternative implementations, the camera 212 and computer 214 could be replaced with a vision system which supplies as an output a signal representative of the distance between the link pin 154 and the bore 155 for the pointer carrier 150. In such implementations, the controller 208 would then be programmed to determine from the received signal the amount and direction of adjustment of the carrier plate 116 required to bring the link pin 154 to the correct distance from the bore 155 for the pointer carrier.

Other aspects of the above-described bi-metal gauge are covered in our co-pending European patent application no (RJ/555), filed the same day as this application.

The disclosures in British patent application no. 9318113.9, from which this application claims priority, and in the abstract accompanying this application are incorporated herein by reference.

## Claims

1. Calibration apparatus for calibrating a gauge including a gauge element mounted on a movable support, a pointer carrier co-operable with the gauge element and a pointer rotatable on the pointer carrier, the pointer carrier and pointer being disposed at a predetermined location relative to the gauge; the calibration apparatus comprising a camera (212) disposed to obtain an image of the gauge, adjusting means (204,206) for adjusting the support (116) so as to adjust the position of the gauge element (112) and processing means (208,214) for processing the obtained image to determine the position of the gauge element relative to the predetermined location and to control the adjusting means on the basis of the determined position of the gauge element relative to the predetermined location.

2. Calibration apparatus according to claim 1, wherein the processing means (208) is adapted to determine the distance between the gauge element and the predetermined location and to control the adjusting means to move the gauge element to a preset distance of the predetermined location.

3. Calibration apparatus according to claim 1 or 2, wherein where the gauge element is a bi-metal element including coupling means for coupling the bi-metal element to the pointer carrier, the processing means (208) is adapted to determine the position of the coupling means relative to the predetermined location and to control the adjusting means to move the bi-metal element to a position in which the coupling means is within a preset distance of the predetermined location.

4. Calibration apparatus according to any preceding claim, comprising energising means (204) for energising the gauge element, the processing means being adapted to control the energising means to energise the gauge element prior to obtaining an image of the gauge.

5. Calibration apparatus according to any preceding claim, comprising fixing means for fixing the support relative to a gauge case.

6. Calibration apparatus according to any preceding claim, comprising pointer setting means for setting the pointer onto the pointer carrier, the processing means being adapted to control the pointer setting means to set the pointer in a predetermined orientation relative to the gauge.

7. A method of calibrating a gauge, which gauge includes a gauge element (112) mounted on a movable support (116), a pointer carrier (150) co-operable with the gauge element and a pointer (160) rotatable on the pointer carrier, the pointer carrier and pointer being disposed at a predetermined location relative to the gauge; the method comprising the steps of obtaining an image of the gauge, processing the obtained image to determine the position of the gauge element relative to the predetermined location and adjusting the support so as to adjust the position of the gauge element relative to the predetermined location.

8. A method according to claim 7, wherein for a gauge having a bi-metal gauge element including coupling means for coupling the bi-metal element to the pointer carrier, the method includes the step of determining the position of the coupling means relative to the predetermined location and adjusting bi-metal element to a position in which the coupling means is within a preset distance of the predetermined location.

9. A method according to claim 7 or 8, comprising the step of energising the gauge element prior to obtaining an image of the gauge.

10. A method according to any one of claims 7 to 9, comprising the step of fixing the support relative to a gauge case following adjustment of the support.

11. A method according to any one of claims 7 to 10, comprising the step of setting the pointer onto the pointer carrier in a predetermined orientation relative to the gauge.

12. A method according to claim 11, comprising the step of energising the gauge element to a predetermined state prior to setting the pointer onto the pointer carrier.
